(19) Europäisches Patentamt
European Patent Office
Office européen des brevets

(11) **EP 2 735 663 B1**

(12) **EUROPEAN PATENT SPECIFICATION**

(45) Date of publication and mention
of the grant of the patent:
**02.09.2020 Bulletin 2020/36**

(51) Int Cl.:
**C04B 41/00** *(2006.01)*        **C04B 41/71** *(2006.01)*
**C04B 41/52** *(2006.01)*        **E04C 2/04** *(2006.01)*
**C09D 5/00** *(2006.01)*        **C09D 7/65** *(2018.01)*
**E04F 13/08** *(2006.01)*

(21) Application number: **13189676.3**

(22) Date of filing: **22.10.2013**

(54) **Building board and method for producing the same**

Bauplatte und Herstellungsverfahren dafür

Panneau de construction et son procédé de production

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.10.2012 JP 2012240115**

(43) Date of publication of application:
**28.05.2014 Bulletin 2014/22**

(73) Proprietor: **Nichiha Corporation
Nagoya-shi,
Aichi 455-8550 (JP)**

(72) Inventors:
• **Imai, Toshio
  Nagoya-shi, Aichi 455-8550 (JP)**
• **Yamamoto, Hiroaki
  Nagoya-shi, Aichi 455-8550 (JP)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**JP-A- H1 190 328        JP-A- 2005 125 315
JP-A- 2006 102 670        JP-A- 2008 095 031
US-A1- 2008 233 160**

EP 2 735 663 B1

**Description**

BACKGROUND OF THE INVENTION

1. Field of the Invention

The present invention relates to a building board that is used for exterior walls and the like of buildings, and a method for producing the building board.

2. Description of the Related Art

In recent years, there is a demand for improvement of thermal insulation effect for building boards used for exterior walls and roofs of buildings such as residential houses in view of environmental problems such as energy conservation. To this end, it has been considered that an insulating coating film is formed on the surface of the building board.

For example, JP 2000-71389A proposed an insulating wall material obtained by forming, on the surface of a base material, an insulating coating film containing mixed and dispersed fine ceramic particles having a thermal insulation effect in a coating film forming material.

JP 11-90328A, JP 2006-102670A and JP 2005-125315A disclose methods for forming a heat-insulating film.

JP 2008-95031A discloses a coating material for forming a heat insulation layer.

SUMMARY OF THE INVENTION

However, it was found from the results of experiments conducted by the inventors that the actual thermal insulation effect of the building board on which the insulating coating film containing mixed and dispersed fine ceramic particles was formed as described above was small (see the experiment described below). As a result of intensive research conducted by the inventors, it was found that one of the reasons was the fact that a hollow ratio of fine ceramic particles tends to become low, and therefore a thermal insulation effect is hard to be obtained.

Furthermore, superior weatherability is required so that building boards are used for exterior walls, roofs, or the like of buildings.

The present invention was made in view of these backgrounds, and it is an object thereof to provide a building board that has superior thermal insulation properties and weatherability, and a method for producing the building board.

An aspect of the present invention is a building board including a base material, an insulating coating film for covering a surface of the base material, and a transparent clear coating film for covering the insulating coating film, wherein the insulating coating film contains a coating film forming material, organic hollow particles, and a water-soluble solvent.

Another aspect of the present invention is a method for producing a building board including a base material, an insulating coating film for covering a surface of the base material, and a clear coating film for covering the insulating coating film, and the method includes a step of forming an insulating coating film in which an insulating paint is applied to a surface of the base material and then dried to form the insulating coating film, and a step of forming a clear coating film in which a clear paint is applied to a surface of the insulating coating film and then dried to form the clear coating film, wherein a paint containing a coating film forming material, organic hollow particles, and a water-soluble solvent whose boiling point is higher than a temperature of the coating film when the coating film is dried in the step of forming an insulating coating film and the step of forming a clear coating film is used as the insulating paint.

In the building board described above, the insulating coating film includes organic hollow particles. Thereby, the thermal insulation function is provided to the insulating coating film. Since the organic hollow particles include an organic material, the hollow ratio thereof tends to become high. That is, since organic materials are flexible, the materials easily stretch when hollow particles are formed, so that the hollow ratio thereof is able to be high. Therefore, the thermal insulation effect of organic hollow particles is large, and the thermal insulation properties of the insulating coating film can be improved.

Since the insulating coating film contains a water-soluble solvent, the homogeneous insulating coating film can be formed. That is, mixing of organic hollow particles having the high thermal insulation effect therein as described above may be considered to cause a problem in that it is hard to uniformly transmit heat to the entire coating when insulating paint is dried after being applied to a base material. Accordingly, the water-soluble solvent is contained in the insulating coating film, so that heat is easily transmitted to the entire coating when the paint is dried. Therefore, a homogeneous insulating coating film can be formed. Thereby, a homogeneous thermal insulation effect can be obtained by the insulating coating film all over the building board, and therefore the thermal insulation properties of the building board can be improved as a whole.

The building board includes a transparent clear coating film for covering the insulating coating film. Thereby, the weatherability of the building board can be improved. Moreover, since the clear coating film is transparent, the clear coating film neither stores heat nor inhibits the thermal insulation effect of the insulating coating film. That is, the weatherability of the building board can be improved without the thermal insulation effect being inhibited by forming the clear coating film.

In the method for producing the building board, the insulating paint used in the step of forming the insulating coating film contains a coating film forming material, organic hollow particles and a water-soluble solvent. Thereby, as described above, the thermal insulation effect of the insulating coating film can be improved to produce the building board having the superior thermal insulation properties.

Note that the boiling point of the water-soluble solvent is higher than the temperature of the coating film when the coating film is dried in the step of forming the insulating coating film and the step of forming the clear coating film. Therefore, even after the coating film is dried in each step, the water-soluble solvent remains sufficiently, and can contribute to the formation of the homogeneous insulating coating film.

As described above, with the present invention, a building board having superior thermal insulation properties and weatherability, and a method for producing the building board can be provided.

BRIEF DESCRIPTION OF THE DRAWINGS

FIG. 1 is a schematic cross-sectional view of a building board of Example 1.
FIG. 2 is a schematic cross-sectional view of a building board of Example 2.

DESCRIPTION OF THE PREFERRED EMBODIMENTS

In the method for producing the building board described above, the temperature of the coating film refers to the temperatures of the insulating coating film and the clear coating film.

The water-soluble solvent includes at least one of a glycol-based solvent and a glycol ether-based solvent, and can effectively achieve the formation of the homogeneous insulating coating film. That is, the glycol-based solvent and glycol ether-based solvent have a high boiling point and tend to remain until the end of the step of forming the insulating coating film. Therefore, the glycol-based solvent and glycol ether-based solvent may contribute to homogenization of the insulating coating film.

The organic hollow particles include at least one of acrylonitrile, methacrylonitrile, vinylidene chloride, acrylic ester, and styrene. In this case, it is possible to especially stably obtain the organic hollow particles in which the hollow ratio is high.

The average hollow ratio of the organic hollow particles is 80% or more, and the insulating coating film can provide a sufficient thermal insulation effect.

It is preferable that the average hollow ratio is 90% or more. In this case, the insulating coating film can provide an even better thermal insulation effect. Furthermore, a preferable upper limit of the average hollow ratio varies due to various factors as long as the hollow state of the organic hollow particles can be maintained.

Note that the average hollow ratio is a value expressed as a percentage by volume. The same applies hereinafter.

A transparent hydrophilic coating film may be formed as an outermost layer so as to cover the clear coating film. In this case, an appearance design of the building board can be maintained for a long time. That is, the hydrophilic coating film described above is formed as the outermost layer, so that, even if dirt is attached to the surface of the building board, namely, the surface of the hydrophilic coating film, water is absorbed into the hydrophilic coating film, and the dirt runs down together with water, by water being poured on the surface of the building board or by rainwater falling thereon. Therefore, the appearance of the building board can be maintained for a long time. Furthermore, dirt attached to the surface of the building board can easily run down together with water to suppress a thermal storage effect on the surface of the building board.

Since the hydrophilic coating film is transparent, the thermal insulation properties of the building board can be secured without the function of the insulating coating film being impaired.

In the method for producing the building board, it is preferable that the temperature of the coating film is not more than 130°C when the coating film is dried in the step of forming the insulating coating film and the step of forming the clear coating film. In this case, while reliably securing the hollow state of the organic hollow particles, it is possible to form the insulating coating film. Therefore, the thermal insulation properties of the building board can be reliably obtained. Furthermore, when the coating film is dried, volatilization of the water-soluble solvent contained in the insulating paint is easily suppressed. Therefore, the insulating coating film can be reliably homogenized.

It is preferable that the temperature of the coating film is set to 40 to 110°C when the coating film is dried in the step of forming the insulating coating film and the step of forming the clear coating film in consideration of the heat resistant temperature of the organic hollow particles.

The method for producing the building board may further include a step of forming a hydrophilic coating film in which a hydrophilic paint is applied to the surface of the clear coating film and then dried to form the transparent hydrophilic coating film as the outermost layer. In this case, the appearance design of the building board can be maintained for a long time.

EXAMPLES

Example 1

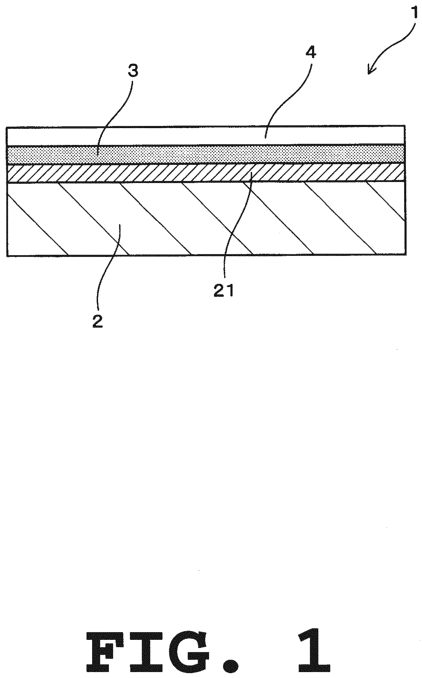

An example of the building board and the method for producing the building board described above will be described with reference to FIG. 1.

A building board 1 of the present example includes a base material 2, an insulating coating film 3 for covering a surface of the base material 2, and a transparent clear coating film 4 for covering the insulating coating film 3.

The insulating coating film 3 contains a coating film forming material, organic hollow particles, and a water-soluble solvent.

The building board 1 can be used for, for example, exterior walls or roofs of buildings.

Examples of the base material 2 include a ceramic siding board such as a wood fiber-reinforced cement board, a fiber-reinforced cement board, a fiber-reinforced cement calcium silicate board, and a slag gypsum board; a metallic siding board; and an ALC board.

A sealer layer 21 is formed on the surface of the base material 2. The sealer layer 21 can be constituted by, for example, an acrylic resin emulsion paint, an acrylic urethane resin-based paint, an epoxy resin-based paint, a solvent-type moisture-curable urethane, and a water dispersion-type isocyanate. Note that the sealer layer 21 may be constituted by one layer, but can include two or more layers.

The insulating coating film 3 having an average film thickness of 5 to 50 $\mu$m is formed on the sealer layer 21 of the base material 2.

Examples of the coating film forming materials that mainly constitute the insulating coating film 3 include a synthetic resin such as an acrylic resin, a silicone resin, a fluororesin, an acrylic silicone resin, a polyurethane resin, and an epoxy resin. The organic hollow particles are mixed and dispersed in this coating film forming material.

The organic hollow particles include at least one of acrylonitrile, methacrylonitrile, vinylidene chloride, acrylic ester, and styrene. The average hollow ratio of the organic hollow particles is 80% or more. The average hollow ratio of the organic hollow particles is more preferably 90% or more.

The content of the organic hollow particles is 0.01 to 5.0 parts by mass in consideration of the thermal insulation effect and coating strength. Here, the content of the organic hollow particles represents the ratio of organic the solid content forming the membrane of the organic hollow particle with respect to 100 parts by mass of the paint solid content contained in the entire insulating coating film. The same applies hereinafter. The average particle diameter of the organic hollow particles is 5 to 50 $\mu$m in consideration of the thermal insulation effect and coating strength.

The water-soluble solvent is contained in the insulating coating film 3. That is, in the building board 1 obtained finally by producing steps described below, the insulating coating film 3 contains the water-soluble solvent. The content of this water-soluble solvent is 0.1 to 10 parts by mass with respect to 100 parts by mass of the solid content of the insulating coating film 3. Thereby, the entire insulating coating film 3 can be reliably formed homogeneously.

The water-soluble solvent includes at least one of a glycol-based solvent and a glycol ether-based solvent. That is, examples of the water-soluble solvent include ethylene glycol, propylene glycol, diethylene glycol, dipropylene glycol N-butyl ether, and tripropylene glycol monomethyl ether, or a mixture thereof.

Furthermore, the insulating coating film 3 contains pigments and serves as a color layer as well. Note that the insulating coating film 3 can also be a coating film containing no pigments.

The clear coating film 4 is formed of a water-soluble paint. This water-soluble paint includes an acrylic silicone resin emulsion paint, an acrylic resin emulsion paint, a silicone resin-based paint, an acrylic urethane-based paint, a fluororesin-based paint, and polyurethane resin-based paint.

When the building board 1 of the present example is produced, the step of forming the insulating coating film and the step of forming the clear coating film described below are performed.

In the step of forming the insulating coating film, an insulating paint is applied to a surface of the base material 2 (surface of the sealer layer 21) and then dried to form the insulating coating film 3.

In the step of forming the clear coating film, a clear paint is applied to a surface of the insulating coating film 3 and then dried to form the clear coating film 4.

The insulating paint is obtained by mixing and dispersing the organic hollow particles in the coating film forming material and contains the water-soluble solvent.

The specific materials of the coating film forming material, the organic hollow particles, and the water-soluble solvent that are contained in the insulating paint, and the clear paint are as described above. The boiling point of the water-soluble solvent is higher than the temperature of the coating film when the coating film is dried in the step of forming the insulating coating film and the step of forming the clear coating film. Conversely, the temperature of the coating film when the coating film is dried in the step of forming the insulating coating film and the step of forming the clear coating film is set to less than the boiling point of the water-soluble solvent. Specifically, the temperature of the coating film when the coating film is dried is not more than 130°C.

Next, the effect of the present example will be described.

In the building board 1 described above, the insulating coating film 3 is containing the mixed and dispersed organic hollow particles. Thereby, the thermal insulation function is provided to the insulating coating film 3. Since the organic hollow particles include an organic material, the hollow ratio thereof tends to become high. Therefore, the thermal insulation properties of the insulating coating film 3 can be improved.

Since the insulating coating film 3 contains a water-soluble solvent, the homogeneous insulating coating film 3 can be formed. That is, the water-soluble solvent is contained in the insulating coating film 3, so that heat is easily transmitted to the entire coating when the insulating paint is dried. Therefore, the homogeneous insulating coating film 3 can be formed. Thereby, the homogeneous thermal insulation effect can be obtained by the insulating coating film 3 all over the building board 1.

The boiling point of the water-soluble solvent is higher than the temperature of the coating film when the coating film is dried in the step of forming the insulating coating film and the step of forming the clear coating film. Therefore, even after the coating film is dried in each step, the water-soluble solvent remains sufficiently and can contribute to the formation of the homogeneous insulating coating film.

The water-soluble solvent includes at least one of a glycol-based solvent and a glycol ether-based solvent, and can effectively achieve the formation of the homogeneous insulating coating film 3. That is, the glycol-based solvent and glycol ether-based solvent have a high boiling point and tend to remain until the end of the step of forming the insulating coating film. Therefore, the glycol-based solvent and glycol ether-based solvent may contribute to homogenization of the insulating coating film.

The temperature of the coating film is set to not more than 130°C when the coating film is dried in the step of forming the insulating coating film and the step of forming the clear coating film, and therefore it is possible to form the insulating coating film while reliably securing the hollow structure of the organic hollow particles. Accordingly, the thermal insulation properties of the building board 1 can be reliably obtained. Furthermore, when the coating film is dried, volatilization of the water-soluble solvent contained in the insulating paint is easily suppressed. Therefore, the insulating coating film 3 can be reliably homogenized.

Since the organic hollow particles include at least one of acrylonitrile, methacrylonitrile, vinylidene chloride, acrylic ester, and styrene, it is possible to especially stably obtain the organic hollow particles in which the hollow ratio is high.

Since the average hollow ratio of the organic hollow particles is 80% or more, the insulating coating film 3 can be provided with a sufficient thermal insulation effect.

Since the building board 1 includes the transparent clear coating film 4, the weatherability of the building board 1 can be improved without the thermal insulation effect by the insulating coating film 3 being inhibited.

As described above, with the present example, a building board having superior thermal insulation properties and weatherability, and a method for producing the building board can be provided.


Example 2

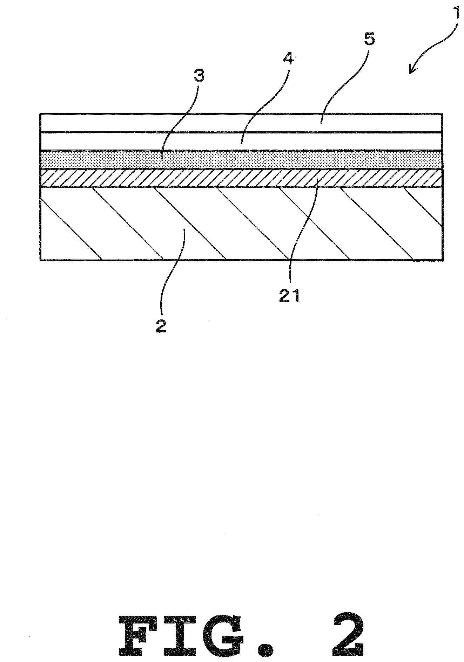

As shown in FIG. 2, the present example is an example in which a transparent hydrophilic coating film 5 is formed as an outermost layer so as to cover the clear coating film 4.

The hydrophilic coating film 5 can be made of, for example, silica, colloidal silica, and fumed silica.

When the building board 1 of the present example is produced, a step of forming the hydrophilic coating film as described below may be added to the step of forming the insulating coating film and the step of forming the clear coating film in the producing method of Example 1. That is, in the step of forming the hydrophilic coating film following the step of forming the clear coating film, a hydrophilic paint is applied to a surface of the clear coating film 4 and then dried to form the transparent hydrophilic coating film 5 as the outermost layer.

Here, a solution containing, for example, dispersed silica, colloidal silica, and fumed silica can be used as the hydrophilic paint.

Other respects are the same as those in Example 1.

In the case of the present example, an appearance design of the building board 1 can be maintained for a long time. That is, the hydrophilic coating film 5 is formed as the outermost layer, so that, even if dirt is attached to the surface of the building board 1, water is absorbed into the hydrophilic coating film 5, and the stain runs down together with water, by water being poured on the surface of the building board 1 or by rainwater falling thereon. Therefore, the appearance of the building board 1 can be maintained for a long time. Furthermore, dirt attached to the surface of the building board 1 can easily run down together with water to suppress a thermal storage effect on the surface of the building board 1.

Since the hydrophilic coating film 5 is transparent, the thermal insulation properties of the building board 1 can be secured without the function of the insulating coating film 3 being impaired.

Other effects that are the same as those in Example 1 are included.

Experiments

The present example is an example in which the thermal insulation properties of the building boards shown in Example 1 and Example 2 described above are evaluated.

As shown in Table 1, the building boards of Example 1 or Example 2 are produced as Samples 1 to 5 (Samples 1, 2, 4 and 5 are according to the invention) by variously changing the insulating coating film (insulating paint), the clear coating film (clear paint), and the hydrophilic coating film (hydrophilic paint).

Furthermore, as shown in Table 2, the building boards of Example 1 in which an insulating coating film (insulating paint) has a constitution different from that of the insulating coating film shown in Example 1 are produced as Samples 6 to 10.

Note that, in all the samples, the base material is a wood fiber reinforced cement board, and the surface thereof is coated with an acrylic resin emulsion paint (white) to form the sealer layer. The insulating coating film is formed on the sealer layer. Sample 5 contains no pigments, and all the others contain white pigments. That is, the insulating coating film of Sample 5 is transparent, and the insulating coating film is a white color layer in all the other samples.

Details of the samples are as described in Table 1 and Table 2. In Samples 1 to 9, the coating film forming materials in the insulating coating film (insulating paint) and in the clear coating film (clear paint) include acrylic silicone emulsion. Sample 10 is provided with no clear coating film. The hydrophilic coating film of Sample 5 includes silica, and a solution containing dispersed colloidal silica is used as the hydrophilic paint for forming the hydrophilic coating film. The hollow particles of Sample 2 include vinylidene chloride and acrylonitrile. The hollow particles of Sample 3 include methacrylonitrile and methyl acrylate.

The hollow particles that is mixed and dispersed in the insulating coating film (insulating paint) of Sample 7 are ceramics. Solid particles are mixed and dispersed in the insulating coating film (insulating paint) of Sample 8 instead of the hollow particles.

Furthermore, in Table 1 and Table 2, the content of the hollow particles (solid particles) and the content of the water-soluble solvent are represented by parts by mass with respect to 100 parts by mass of the paint solid content.

Problems such as production of cracks, deterioration of the thermal insulation performance, and an appearance inferiority occurred in the insulating coating film of Sample 9 in which the insulating paint contained no water-soluble solvent.

The thermal insulation effect test was performed on the building boards of Samples 1 to 10.

A lamp irradiating method was used as the testing method. That is, the sample surface was irradiated with light by a halogen lamp of 100 V and 150 W disposed at a position 10 cm away from the sample surface. When the sample surface was continuously irradiated with light for 10 minutes, a temperature of the sample surface was measured using a radiation thermometer. The results are shown in Table 1 and Table 2.

Table 1

| | | | Sample 1 | Sample 2 | Sample 3 | Sample 4 | Sample 5 |
|---|---|---|---|---|---|---|---|
| Insulating paint | Hollow particles | Composition | Acrylonitrile | Vinylidene chloride and acrylonitrile | Methacrylonitrile and methyl acrylate | Acrylonitrile | Acrylonitrile |
| | | Average particle diameter (μm) | 20 | 20 | 40 | 15 | 15 |
| | | Average hollow ratio (%) | 98 | 98 | 98 | 98 | 98 |
| | | Content (parts by mass) | 2.0 | 5.0 | 0.5 | 2.0 | 2.0 |
| | Water-soluble solvent | Solvent type | Ethylene glycol | Propylene glycol | Diethylene glycol | Dipropylene glycol N-butyl ether | Tripropylene glycol monomethyl ether |
| | | Content (parts by mass) | 2.0 | 0.2 | 10.0 | 2.0 | 2.0 |
| | Coating film forming material | Composition | Acrylic silicone emulsion | Acrylic silicone emulsion | Acrylic silicone emulsion | Acrylic silicone emulsion | Acrylic silicone emulsion |
| Insulating coating film | Film thickness (μm) | | 50 | 30 | 500 | 50 | 50 |
| | Clear coating film | | Acrylic silicone emulsion | Acrylic silicone emulsion | Acrylic silicone emulsion | Acrylic silicone emulsion | Acrylic silicone emulsion |
| | Hydrophilic coating film | | Absent | Absent | Absent | Absent | Present |
| Physical properties | Surface temperature (°C) | | 55 | 56 | 50 | 54 | 54 |
| | Gloss retention ratio | | Good | Good | Good | Good | Good |

Table 2

| | | | Sample 6 | Sample 7 | Sample 8 | Sample 9 | Sample 10 |
|---|---|---|---|---|---|---|---|
| Insulating paint | Hollow particles | Composition | - | Ceramic | Methyl acrylate (solid) | Acrylonitrile | Acrylonitrile |
| | | Average particle diameter ($\mu$m) | - | 150 | 20 | 20 | 20 |
| | | Average hollow ratio (%) | - | 30 | 0 | 98 | 98 |
| | | Content (parts by mass) | - | 5.0 | 2.0 | 2.0 | 2.0 |
| | Water-soluble solvent | Solvent type | - | Propylene glycol | Ethylene glycol | - | Ethylene glycol |
| | | Content (parts by mass) | - | 2.0 | 2.0 | - | 2.0 |
| | Coating film forming material | Composition | Acrylic silicone emulsion | Acrylic silicone emulsion | Acrylic silicone emulsion | Acrylic silicone emulsion | Acrylic silicone emulsion |
| Insulating coating film | Film thickness ($\mu$m) | | 20 | 50 | 100 | 100 | 50 |
| Clear coating film | | | Acrylic silicone emulsion | Acrylic silicone emulsion | Acrylic silicone emulsion | Acrylic silicone emulsion | Absent |
| Hydrophilic coating film | | | Absent | Absent | Absent | Absent | Absentt |
| Physical properties | Surface temperature (°C) | | 65 | 63 | 63 | 60 | 55 |
| | Gloss retention ratio | | Good | Good | Good | Good | Poor |

As shown in Table 1 and Table 2, the surface temperatures of Samples 6 to 9 reached 60 to 65°C, whereas the surface temperatures of Samples 1 to 5 fell within the range of 50 to 56°C. That is, the constitutions of Example 1 and Example 2 can be used to reliably suppress rise in temperature of the building board, and it can be said that the thermal insulation properties thereof can be improved thereby.

Weatherability of the building board was evaluated. Weatherability thereof was evaluated using the degree of changes of the gloss value (gloss retention ratio), as an evaluation method, on the surface of the building board before and after a predetermined durability test was performed.

Specifically, the test below was performed using Samples 1 to 10 described above.

First, gloss values at random five points on the surface of the building board (coating surface) were measured using a hand-held gloss checker "Gloss Checker IG-320" manufactured by HORIBA, Ltd. The average of these values was taken as an "initial average gloss value".

Next, an accelerated test (cycle of irradiation for 4 hours and wetting for 4 hours) was performed on each sample for 800 hours using "Metal Weather Meter" manufactured by Daipla Wintes Co., Ltd. Here, the irradiation condition is set to an irradiation intensity of 1,100W/m$^2$, an irradiation distance of 240 mm, and a black panel temperature of 63°C. The wetting condition is set to a condensation temperature of 30°C and a condensation humidity of 98%, and the samples were showered for 10 seconds before and after condensation.

After the accelerated test described above, gloss values at random five points on the sample surface (coating surface) were measured using the above hand-held gloss checker similarly to before the accelerated test, and the average of these values was taken as an "average gloss value after weatherability test".

A gloss retention ratio was calculated using the calculation formula below.

$$\text{Gloss retention ratio (\%)} = \text{(average gloss value after weatherability test)} / \text{(initial average gloss value)}$$

The gloss retention ratio calculated was evaluated as described below, and the results of evaluation were described in Table 1 and Table 2.
Good: the gloss retention ratio is 80% or more.
Fair: the gloss retention ratio is 50% or more but less than 80%.
Poor: the gloss retention ratio is less than 50%.
As shown in Table 1 and Table 2, the gloss retention ratio of Sample 10 including no clear coating film was less than 50%, whereas all of the gloss retention ratios of Samples 1 to 9 including the clear coating film were 80% or more. That is, Samples 1 to 9 including the clear coating film retain the initial gloss even after the weatherability test (accelerated test) is performed thereon, and it can be said that Samples 1 to 9 have superior weatherability.
These results show that weatherability can be improved by forming the clear coating film.

**Claims**

1. A building board **(1)** comprising:

   a base material **(2)**;
   a sealer layer **(21)** formed on the surface of the base material **(2)**;
   an insulating coating film **(3)** formed on the sealer layer **(21)** of the base material **(2)** for covering a surface of the base material **(2)**; and
   a transparent clear coating film **(4)** for covering the insulating coating film **(3)**,
   wherein the insulating coating film **(3)** has an average film thickness of 5 to 50 $\mu$m, and contains a coating film forming material, organic hollow particles, and a water-soluble solvent, and
   the insulating coating film contains 0.01 to 5.0 parts by mass of the organic hollow particles with respect to 100 parts by mass of solid content thereof, and
   the organic hollow particles have an average porosity of 80% or more and an average particle diameter of 5 to 50 $\mu$m, and comprise at least one of acrylonitrile, methacrylonitrile, vinylidene chloride, acrylic ester, and styrene, and
   the water-soluble solvent is at least one of a glycol-based solvent and a glycol ether-based solvent,
   the boiling point of the water-soluble solvent is higher than the temperature of the coating film when the coating film is dried in the step of forming the insulating coating film **(3)** and the step of forming the transparent clear coating film **(4)**,
   the content of the water-soluble solvent is 0.1 to 10 parts by mass with respect to 100 parts by mass of the solid content of the insulating coating film **(3)**, and
   wherein the transparent clear coating film **(4)** is constituted by any water-soluble paint selected from a group consisting of acrylic silicone resin emulsion paint, acrylic resin emulsion paint, silicone resin-based paint, acrylic urethane-based paint, fluororesin-based paint, and polyurethane resin-based paint,

2. The building board **(1)** according to claim 1, wherein a transparent hydrophilic coating film **(5)** is formed as an outermost layer so as to cover the transparent clear coating film **(4)**, and wherein the transparent hydrophilic coating film **(5)** is constituted by at least one of silica, colloidal silica, and fumed silica.

3. The building board (1) according to claim 1, wherein the base material **(2)** is any one selected from a group consisting of a wood fiber-reinforced cement board, a fiber-reinforced cement board, a fiber-reinforced cement calcium silicate board, a slag gypsum board, a metallic siding board, and an ALC board.

4. A method for producing a building board **(1)** comprising a base material **(2)**, a sealer layer **(21)** formed on the surface of the base material **(2)**, an insulating coating film **(3)** formed on the sealer layer **(21)** of the base material **(2)** for covering a surface of the base material **(2)**, and a transparent clear coating film **(4)** for covering the insulating coating film **(3)**, the method comprising:

   a step of forming a seal layer **(21)** on a surface of the base material **(2)**;
   a step of forming an insulating coating film **(3)** in which an insulating paint is applied on the seal layer **(21)** of the base material **(2)** and then dried to form the insulating coating film **(3)** which has an average film thickness of 5 to 50 µm; and

a step of forming a transparent clear coating film **(4)** in which a water-soluble paint is applied to a surface of the insulating coating film **(3)** and then dried to form the transparent clear coating film **(4),**

wherein a paint containing a coating film forming material, organic hollow particles, and a water-soluble solvent whose boiling point is higher than a temperature of the coating film when the coating film is dried in the step of forming an insulating coating film **(3)** and the step of forming a transparent clear coating film **(4)** is used as the insulating paint,

the organic hollow particles have an average porosity of 80% or more, and an average particle diameter of 5 to 50 µm, and comprise at least one of acrylonitrile, methacrylonitrile, vinylidene chloride, acrylic ester, and styrene, and

the insulating coating film contains 0.01 to 5.0 parts by mass of the organic hollow particles with respect to 100 parts by mass of solid content thereof, and

the water-soluble solvent is at least one of a glycol-based solvent and a glycol ether-based solvent,

the content of the water-soluble solvent is 0.1 to 10 parts by mass with respect to 100 parts by mass of the solid content of the insulating coating film **(3),** and

wherein the water-soluble paint for forming the transparent clear coating film **(4)** is selected from a group consisting of acrylic silicone resin emulsion paint, acrylic resin emulsion paint, silicone resin-based paint, acrylic urethane-based paint, fluororesin-based paint, and polyurethane resin-based paint.

5. The method for producing a building board **(1)** according to claim 4, wherein the temperature of the coating film is set to 40 to not more than 130°C when the coating film is dried in the step of forming an insulating coating film **(3)** and the step of forming a transparent clear coating film **(4).**

6. The method for producing a building board **(1)** according to claim 4, further comprising a step of forming a transparent hydrophilic coating film **(5)** in which a hydrophilic paint is applied to a surface of the transparent clear coating film **(4)** and then dried to form a transparent hydrophilic coating film **(5)** as an outermost layer, wherein the hydrophilic paint is a solution in which at least one of silica, colloidal silica, and fumed silica is dispersed.

7. The method for producing a building board **(1)** according to claim 4, wherein the base material **(2)** is any one selected from a group consisting of a wood fiber-reinforced cement board, a fiber-reinforced cement board, a fiber-reinforced cement calcium silicate board, a slag gypsum board, a metallic siding board, and an ALC board.

**Patentansprüche**

1. Bauplatte (1), umfassend:

ein Basismaterial (2);

eine Versiegelungsschicht (21), die auf der Oberfläche des Basismaterials (2) ausgebildet ist;

einen isolierenden Beschichtungsfilm (3), der auf der Versiegelungsschicht (21) des Basismaterials (2) ausgebildet ist, um eine Oberfläche des Basismaterials (2) zu bedecken; und

einen transparenten klaren Beschichtungsfilm (4) zum Abdecken des isolierenden Beschichtungsfilms (3),

wobei der isolierende Beschichtungsfilm (3) eine durchschnittliche Filmdicke von 5 bis 50 µm hat, und ein beschichtungsfilmbildendes Material, organische Hohlpartikel und ein wasserlösliches Lösungsmittel enthält, und

der isolierende Beschichtungsfilm 0,01 bis 5,0 Massenteile der organischen Hohlpartikel in Bezug auf 100 Massenteile des Feststoffgehalts davon enthält, und

die organischen Hohlpartikel eine durchschnittliche Porosität von 80 % oder mehr und einen durchschnittlichen Partikeldurchmesser von 5 bis 50 µm haben, und mindestens eines von Acrylnitril, Methacrylnitril, Vinylidenchlorid, Acrylester und Styrol umfassen, und

das wasserlösliche Lösungsmittel mindestens eines von einem Lösungsmittel auf Glykolbasis und einem Lösungsmittel auf Glykoletherbasis ist,

der Siedepunkt des wasserlöslichen Lösungsmittels höher ist als die Temperatur des Beschichtungsfilms, wenn der Beschichtungsfilm in dem Schritt der Bildung des isolierenden Beschichtungsfilms (3) und dem Schritt der Bildung des transparenten klaren Beschichtungsfilms (4) getrocknet wird,

der Gehalt des wasserlöslichen Lösungsmittels 0,1 bis 10 Massenteile bezogen auf 100 Massenteile des Feststoffgehalts des isolierenden Beschichtungsfilms (3) beträgt und

wobei der transparente klare Beschichtungsfilm (4) aus einem beliebigen wasserlöslichen Anstrichmittel besteht, das aus einer Gruppe ausgewählt ist, bestehend aus Acryl-Silikonharz-Emulsionsanstrichmittel, Acrylharz-Emulsionsanstrichmittel, Anstrichmittel auf Silikonharzbasis, Anstrichmittel auf Acryl-Urethan-Basis, Anstrichmittel auf Fluorharz-Basis und Anstrichmittel auf Polyurethanharz-Basis.

2. Bauplatte (1) gemäß Anspruch 1, wobei ein transparenter hydrophiler Beschichtungsfilm (5) als eine äußerste Schicht gebildet ist, um den transparenten klaren Beschichtungsfilm (4) zu bedecken, und wobei der transparente hydrophile Beschichtungsfilm (5) aus zumindest einem von Siliziumdioxid, Kieselsol und pyrogenem Siliziumdioxid gebildet ist.

3. Bauplatte (1) gemäß Anspruch 1, wobei das Basismaterial (2) ein beliebiges ist, ausgewählt aus einer Gruppe, bestehend aus einer holzfaserverstärkten Zementplatte, einer faserverstärkten Zementplatte, einer faserverstärkten Zement-Calciumsilikatplatte, einer Schlackengipsplatte, einer metallischen Verkleidungsplatte und einer ALC-Platte.

4. Verfahren zur Herstellung einer Bauplatte (1), die ein Basismaterial (2), eine auf der Oberfläche des Basismaterials (2) gebildete Versiegelungsschicht (21), einen auf der Versiegelungsschicht (21) des Basismaterials (2) gebildeten isolierenden Beschichtungsfilm (3) zum Bedecken einer Oberfläche des Basismaterials (2) und einen transparenten klaren Beschichtungsfilm (4) zum Bedecken des isolierenden Beschichtungsfilms (3) umfasst, wobei das Verfahren umfasst:

einen Schritt des Ausbildens einer Versiegelungsschicht (21) auf einer Oberfläche des Basismaterials (2);
einen Schritt des Bildens eines isolierenden Beschichtungsfilms (3), bei dem ein isolierendes Anstrichmittel auf die Versiegelungsschicht (21) des Basismaterials (2) aufgetragen und dann getrocknet wird, um den isolierenden Beschichtungsfilm (3) zu bilden, der eine durchschnittliche Filmdicke von 5 bis 50 $\mu$m hat; und
einen Schritt der Bildung eines transparenten klaren Beschichtungsfilms (4), bei dem ein wasserlösliches Anstrichmittel auf eine Oberfläche des isolierenden Beschichtungsfilms (3) aufgetragen und dann getrocknet wird, um den transparenten klaren Beschichtungsfilm (4) zu bilden,
wobei ein Anstrichmittel, das ein beschichtungsfilmbildendes Material, organische Hohlpartikel und ein wasserlösliches Lösungsmittel, dessen Siedepunkt höher als eine Temperatur des Beschichtungsfilms ist, wenn der Beschichtungsfilm im Schritt der Bildung eines isolierenden Beschichtungsfilms (3) und dem Schritt der Bildung eines transparenten klaren Beschichtungsfilms (4) getrocknet wird, enthält, als das isolierende Anstrichmittel verwendet wird,
die organischen Hohlpartikel eine durchschnittliche Porosität von 80 % oder mehr und einen durchschnittlichen Partikeldurchmesser von 5 bis 50 $\mu$m aufweisen, und mindestens eines von Acrylnitril, Methacrylnitril, Vinylidenchlorid, Acrylester und Styrol umfassen, und
der isolierende Beschichtungsfilm 0,01 bis 5,0 Massenteile der organischen Hohlpartikel in Bezug auf 100 Massenteile des Feststoffgehalts davon enthält, und
das wasserlösliche Lösungsmittel mindestens eines von einem Lösungsmittel auf Glykolbasis und einem Lösungsmittel auf Glykoletherbasis ist,
der Gehalt des wasserlöslichen Lösungsmittels 0,1 bis 10 Massenteile bezogen auf 100 Massenteile des Feststoffgehalts des isolierenden Beschichtungsfilms (3) beträgt und
wobei das wasserlösliche Anstrichmittel zur Bildung des transparenten klaren Beschichtungsfilms (4) aus einer Gruppe ausgewählt ist, bestehend aus Acryl-Silikonharz-Emulsionsanstrichmittel, Acrylharz-Emulsionsanstrichmittel, Anstrichmittel auf Silikonharzbasis, Anstrichmittel auf Acryl-Urethan-Basis, Anstrichmittel auf Fluorharz-Basis und Anstrichmittel auf Polyurethanharz-Basis.

5. Verfahren zur Herstellung einer Bauplatte (1) gemäß Anspruch 4, wobei die Temperatur des Beschichtungsfilms auf 40 bis nicht mehr als 130°C eingestellt wird, wenn der Beschichtungsfilm in dem Schritt der Bildung eines isolierenden Beschichtungsfilms (3) und dem Schritt der Bildung eines transparenten klaren Beschichtungsfilms (4) getrocknet wird.

6. Verfahren zur Herstellung einer Bauplatte (1) gemäß Anspruch 4, ferner umfassend einen Schritt der Bildung eines transparenten hydrophilen Beschichtungsfilms (5), bei dem ein hydrophiles Anstrichmittel auf eine Oberfläche des transparenten klaren Beschichtungsfilms (4) aufgetragen und dann getrocknet wird, um einen transparenten hydrophilen Beschichtungsfilm (5) als äußerste Schicht zu bilden, wobei das hydrophile Anstrichmittel eine Lösung ist, in der mindestens eines von Siliciumdioxid, Kieselsol und pyrogenem Siliciumdioxid dispergiert ist.

7. Verfahren zur Herstellung einer Bauplatte (1) gemäß Anspruch 4, wobei das Basismaterial (2) ein beliebiges ist, ausgewählt aus einer Gruppe, bestehend aus einer holzfaserverstärkten Zementplatte, einer faserverstärkten Zementzementplatte, einer faserverstärkten Zement-Calciumsilikatplatte, einer Schlackengipsplatte, einer metallischen Verkleidungsplatte und einer ALC-Platte.

**Revendications**

1. Panneau de construction (1) comprenant :

   un matériau de base (2) ;
   une couche d'étanchéité (21) formée sur la surface du matériau de base (2) ;
   un film de revêtement isolant (3) formé sur la couche d'étanchéité (21) du matériau de base (2) pour couvrir une surface du matériau de base (2) ; et
   un film de revêtement incolore transparent (4) pour couvrir le film de revêtement isolant (3),
   dans lequel le film de revêtement isolant (3) a une épaisseur moyenne de film de 5 à 50 pm, et contient un matériau filmogène de revêtement, des particules creuses organiques, et un solvant hydrosoluble, et
   le film de revêtement isolant contient 0,01 à 5,0 parties en masse des particules creuses organiques par rapport à 100 parties en masse de sa teneur en matière sèche, et
   les particules creuses organiques ont une porosité moyenne de 80 % ou plus et un diamètre moyen de particule de 5 à 50 pm, et comprennent au moins l'un parmi l'acrylonitrile, le méthacrylonitrile, le chlorure de vinylidène, un ester acrylique et le styrène, et
   le solvant hydrosoluble est au moins l'un parmi un solvant à base de glycol et un solvant à base d'éther de glycol, le point d'ébullition du solvant hydrosoluble est supérieur à la température du film de revêtement lorsque le film de revêtement est séché à l'étape de formation du film de revêtement isolant (3) et à l'étape de formation du film de revêtement incolore transparent (4),
   la teneur du solvant hydrosoluble est de 0,1 à 10 parties en masse par rapport à 100 parties en masse de la teneur en matière sèche du film de revêtement isolant (3), et
   dans lequel le film de revêtement incolore transparent (4) est constitué de toute peinture hydrosoluble choisie dans un groupe consistant en une peinture d'émulsion de résine de silicone acrylique, une peinture d'émulsion de résine acrylique, une peinture à base de résine de silicone, une peinture à base d'uréthane acrylique, une peinture à base de fluororésine et une peinture à base de résine de polyuréthane.

2. Panneau de construction (1) selon la revendication 1, dans lequel un film de revêtement hydrophile transparent (5) est formé en tant que couche la plus externe de façon à couvrir le film de revêtement incolore transparent (4), et dans lequel le film de revêtement hydrophile transparent (5) est constitué d'au moins l'une parmi la silice, la silice colloïdale et la silice sublimée.

3. Panneau de construction (1) selon la revendication 1, dans lequel le matériau de base (2) est l'un quelconque choisi dans un groupe consistant en un panneau en ciment renforcé de fibres de bois, un panneau en ciment renforcé de fibres, un panneau en silicate de calcium-ciment renforcé de fibres, un panneau en gypse de laitier, un panneau à parement métallique et un panneau en ALC.

4. Procédé de production d'un panneau de construction (1) comprenant un matériau de base (2), une couche d'étanchéité (21) formée sur la surface du matériau de base (2), un film de revêtement isolant (3) formé sur la couche d'étanchéité (21) du matériau de base (2) pour couvrir une surface du matériau de base (2), et un film de revêtement incolore transparent (4) pour couvrir le film de revêtement isolant (3), le procédé comprenant :

   une étape de formation d'une couche d'étanchéification (21) sur une surface du matériau de base (2) ;
   une étape de formation d'un film de revêtement isolant (3) dans laquelle une peinture isolante est appliquée sur la couche d'étanchéification (21) du matériau de base (2) puis séchée pour former le film de revêtement isolant (3) qui a une épaisseur moyenne de film de 5 à 50 $\mu$m ; et
   une étape de formation d'un film de revêtement incolore transparent (4) dans laquelle une peinture hydrosoluble est appliquée à une surface du film de revêtement isolant (3),
   puis séchée pour former le film de revêtement incolore transparent (4),
   dans lequel une peinture contenant un matériau filmogène de revêtement, des particules creuses organiques, et un solvant hydrosoluble dont le point d'ébullition est supérieur à une température du film de revêtement lorsque le film de revêtement est séché à l'étape de formation d'un film de revêtement isolant (3) et à l'étape de formation d'un film de revêtement incolore transparent (4) est utilisée en tant que peinture isolante,

les particules creuses organiques ont une porosité moyenne de 80 % ou plus, et un diamètre moyen de particule de 5 à 50 pm, et comprennent au moins l'un parmi l'acrylonitrile, le méthacrylonitrile, le chlorure de vinylidène, un ester acrylique et le styrène, et

le film de revêtement isolant contient 0,01 à 5,0 parties en masse des particules creuses organiques par rapport à de 100 parties en masse de sa teneur en matière sèche, et

le solvant hydrosoluble est au moins l'un parmi un solvant à base de glycol et un solvant à base d'éther de glycol, la teneur du solvant hydrosoluble est de 0,1 à 10 parties en masse par rapport à de 100 parties en masse de la teneur en matière sèche du film de revêtement isolant (3), et

dans lequel la peinture hydrosoluble pour former le film de revêtement incolore transparent (4) est choisie dans un groupe consistant en une peinture d'émulsion de résine de silicone acrylique, une peinture d'émulsion de résine acrylique, une peinture à base de résine de silicone, une peinture à base d'uréthane acrylique, une peinture à base de fluororésine et une peinture à base de résine de polyuréthane.

5. Procédé de production d'un panneau de construction (1) selon la revendication 4, dans lequel la température du film de revêtement est établie à 40 jusqu'à pas plus de 130 °C lorsque le film de revêtement est séché à l'étape de formation d'un film de revêtement isolant (3) et à l'étape de formation d'un film de revêtement incolore transparent (4).

6. Procédé de production d'un panneau de construction (1) selon la revendication 4, comprenant en outre une étape de formation d'un film de revêtement hydrophile transparent (5) dans laquelle une peinture hydrophile est appliquée à une surface du film de revêtement incolore transparent (4), puis séchée pour former un film de revêtement hydrophile transparent (5) en tant que couche la plus externe, dans lequel la peinture hydrophile est une solution dans laquelle est dispersée au moins l'une parmi la silice, la silice colloïdale et la silice sublimée.

7. Procédé de production d'un panneau de construction (1) selon la revendication 4, dans lequel le matériau de base (2) est l'un quelconque choisi dans un groupe consistant en un panneau en ciment renforcé de fibres de bois, un panneau en ciment renforcé de fibres, un panneau en silicate de calcium-ciment renforcé de fibres, un panneau en gypse de laitier, un panneau à parement métallique et un panneau en ALC.

FIG. 1

# FIG. 2

**EP 2 735 663 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000071389 A
- JP 11090328 A
- JP 2006102670 A
- JP 2005125315 A
- JP 2008095031 A